# EUROPÄISCHE PATENTSCHRIFT

(11) **EP 2 035 245 B1**
(45) Veröffentlichungstag und Bekanntmachung des Hinweises auf die Patenterteilung: **17.08.2011**
(21) Anmeldenummer: 07764785.7
(22) Anmeldetag: 22.06.2007
(51) Int. Cl.: B60J 10/08, B60P 1/28, B62D 33/027

(54) **DICHTLEISTE FÜR ENTLADEKLAPPEN**
A SEALING STRIP FOR THE UNLOADING HATCHES OF VEHICLES CARRYING BULK GOODS
BAGUETTE D'ÉTANCHÉITÉ POUR DES ABATTANTS DE DÉCHARGEMENT DE VÉHICULES TRANSPORTANT DES MATIÈRES EN VRAC

(30) Priorität: 26.06.2006 DE 102006029594; 19.09.2006 DE 102006044609
(43) Veröffentlichungstag der Anmeldung: 18.03.2009
(73) Patentinhaber: GMT Gummi-Metall-Technik GmbH, 77815 Bühl (DE); Willbrandt KG, 22525 Hamburg (DE)
(72) Erfinder: PULM, Toni, 52797 Lohmar (DE); WALTER, Wilfried, 30966 Hemmingen (DE)
(74) Vertreter: Miller, Andreas
(86) Internationale Anmeldenummer: PCT/EP2007/005515
(87) Internationale Veröffentlichungsnummer: WO 2008/000393

(56) Entgegenhaltungen:
- GB-A- 2 035 226
- US-A- 4 751 395

## Beschreibung

Die Erfindung betrifft eine Abdichtungsvorrichtung zur Montage zwischen einer Entladeklappe und der Ladefläche eines Schüttgutwagens. Eine solche Vorrichtung ist aus der US 4751345 bekannt. Elastische Abdichtungen sind bekannt, wobei diese reinen Gummidichtungen nach kurzer Zeit, aufgrund der hohen Schließkräfte und der oft an der Oberfläche beschädigten Entladeklappen Beschädigungen aufweisen, die häufig zu Funktionseinbußen führen. Um größere Streuverluste zu vermeiden, müssen diese bekannten Dichtleisten häufig ausgewechselt werden. Das Auswechseln der bisher bekannten Dichtleisten erfolgt durch Lösen der zur Befestigung der Dichtleiste eingesetzten Schrauben. Dies ist sehr aufwendig, da die Schrauben nach kurzer Zeit korrodiert sind und sich nur noch schwer lösen lassen.

Die Erfindung betrifft eine neuartige Vorrichtung zum Abdichten der Ladeflächen von Schüttguttransportern mittels einer leicht auswechselbaren, federnden, mit Gummirippen besetzten Dichtschiene, die die Vorteile der reinen metallischen und der reinen elastischen Abdichtung in sich vereint und die auf aufwendige Schraubbefestigung verzichtet.

Die Erfindung hat die Aufgabe, die Nachteile der bekannten Abdichtungen weitgehend zu vermeiden durch Vereinigung der Vorteile einer reinen metallischen und einer reinen elastischen Abdichtung bei leichter Auswechselbarkeit der Dichtleiste. Die vier nebeneinander angeordneten, jeweils an beiden Seiten abgeschrägten anvulkanisierten Gummirippen legen sich flächig an die abzudichtende Fläche (Sattelblech bzw Ladefläche des Schüttgutwagens) und ermöglichen dadurch eine verbesserte Dichtigkeit bei flexiblen Anpresswinkeln der Ladeklappe. Unebenheiten im Sattelblech werden durch die abgeschrägten und flexiblen Gummirippen besser ausgeglichen. Die Rippenkonstruktion verhindert bei Minustemperaturen ein vollflächiges Anfrieren der Dichtung und gewährleistet so auch im Winter ein schadfreies Öffnen der Dichtung.

Die Aufgabe wird im einzelnen dadurch gelöst, dass die neuartige Vorrichtung zum Abdichten der Ladeflächen von Schüttgutwagen, welche zwischen Entladeklappe und Sattelblech bzw Ladefläche des Wagenkasten von Schüttgutwagen angeordnet werden kann, aus einer metallischen Dichtschiene (1) besteht, auf die vier nebeneinander angeordneten, jeweils seitlich abgeschrägte flexible Gummirippen (2) aufvulkanisiert sind. Die Dichtschiene ist ihrerseits rundum mit Elastomer (4) beschichtet und so mit einem u-förmigen Grundkörper (3) verbunden ist, dass sie in Andockrichtung (x) federnd angeordnet ist und sich ihr U-förmiger Grundkörper (3) ohne weitere Befestigung in ein aufnahmefähiges ebenfalls U-förmiges Aufnahmeprofil (5) einschieben lässt, das an der Entladeklappe befestigt ist. Der Gegenstand wird durch die Ansprüche 1-7 wiedergegeben.

### Erläuterung der Zeichnungen

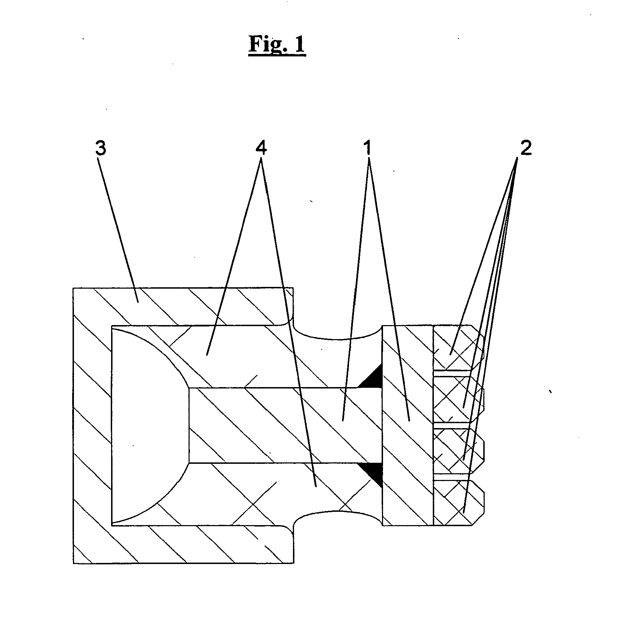

- Fig 1:: zeigt einen Schnitt durch eine beispielhaften Dichtleiste (Herstellungslänge ca.200mm) federnde Richtung X min 8 mm

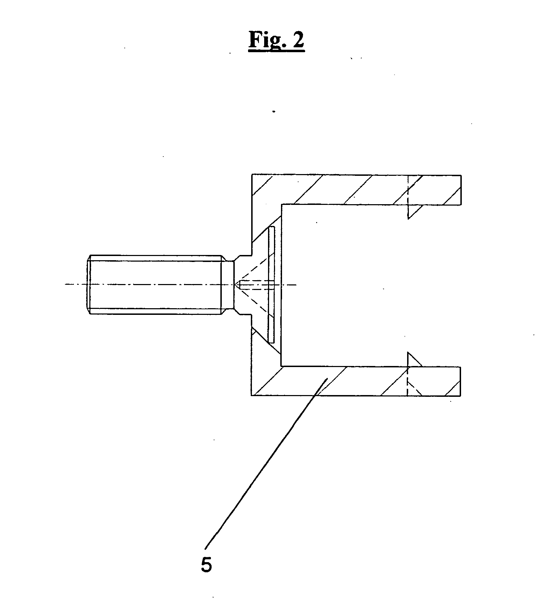

- Fig. 2:: zeigt die an der Entladeklappe anzubringende Halteschiene für die Dichtleiste

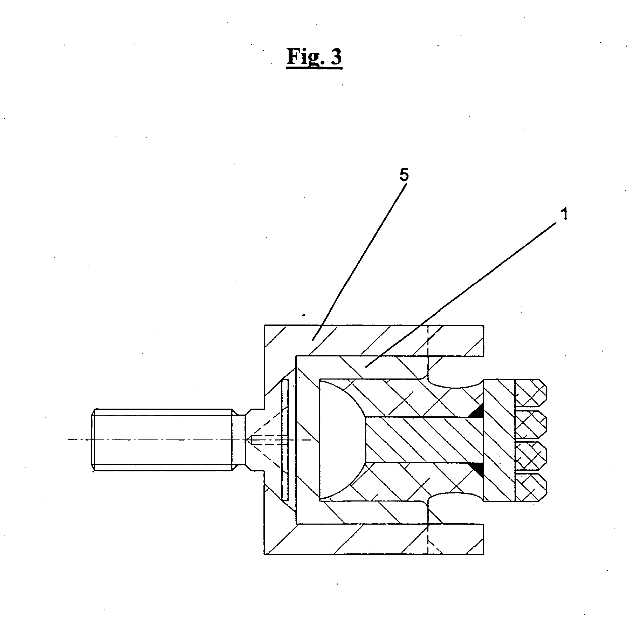

- Fig 3:: zeigt die Dichtleiste in der Halteschiene

### Bezeichnung der Positionen

- Pos.1: Dichtleiste
- Pos.2: Gummirippen
- Pos.3: Grundkörper
- Pos.4: Elastomer
- Pos.5: Aufnahmeprofil

## Patentansprüche

1. Abdichtungsvorrichtung zur Montage zwischen einer Entladeklappe und der Ladefläche eines Schüttgutwagens, **dadurch gekennzeichnet, dass** die Vorrichtung eine metallische Dichtschiene (1) mit vier nebeneinander angeordneten, jeweils seitlich abgeschrägten, flexibel aufvulkanisierten Gummirippen (2) umfasst, wobei die metallische Dichtschiene elastisch mit einem u-förmigen Grundkörper (3) verbunden ist, und die Vorrichtung so eine federnde Dichtkante zur ladefläche bilden kann.

2. Abdichtungsvorrichtung nach Anspruch 1, **dadurch gekennzeichnet, dass** die aufvulkanisierten Gummirippen (2) sich bei montierter Vorrichtung flächig an die abzudichtende Fläche anlegen und **dadurch** eine verbesserte Dichtigkeit bei flexiblen Anpresswinkeln der Ladeklappe erzeugen.

3. Abdichtungsvorrichtung nach Anspruch 1, **dadurch gekennzeichnet, dass** die aufvulkanisierten Gummirippen (2) sich bei montierter Vorrichtung flexibel an die abzudichtende Fläche anpassen und **dadurch** Unebenheiten im Sattelblech ausgleichen.

4. Abdichtungsvorrichtung nach Anspruch 1, **dadurch gekennzeichnet, dass** die Konstruktion und die Anordnung der aufvulkanisierten abgeschrägten Gummirippen (2) derart ist, dass ein vollflächiges Anfrieren der Dichtung bei Minustemperaturen verhindert werden kann und **dadurch** ein schadfreies Öffnen der Dichtung gewährleistet wird.

5. Abdichtungsvorrichtung nach Anspruch 1, **dadurch gekennzeichnet, dass** die Dichtschiene (1) in ein Elastomer (4) einvulkanisiert ist und **dadurch** einen gleichmäßigen Anpressdruck erzeugt.

6. Abdichtungsvorrichtung nach Anspruch 1 und 5, **dadurch gekennzeichnet, dass** das Elastomer (4) eine gute Federwirkung aufweist.

7. Abdichtungsvorrichtung nach Anspruch 1 mit einem Profil (5), **dadurch gekennzeichnet; dass** der Grundkörper (3) durch Einschieben in das Profil (5) ohne Schrauben befestigt werden kann.

## Claims

1. Sealing arrangement to be fitted between the discharge flap and the loading platform of a hopper car **characterised in that** the arrangement comprises a metallic sealing rail (1) with four adjacent rubber strips (2) flexibly vulcanised and chamfered at the side each, whereby the metallic sealing rail is bonded elastically with a U-shaped structure (3), permitting the arrangement to form a flexible sealing edge towards the loading platform.

2. Sealing arrangement as set forth in claim (1) **characterised in that** the vulcanised rubber strips (2) contact flat to the surface to be sealed when the arrangement is mounted, and thus provides an improved tightness to the flexible contact angle of the tail board.

3. Sealing arrangement as set forth in claim (1) **characterised in that** the vulcanised rubber strips (2) adjust to the surface to be sealed when the arrangement is mounted and thus compensates unevennesses in the saddle plate.

4. Sealing arrangement as set forth in claim (1) **characterised in that** the construction and the design of the vulcanised chamfered rubber strips (2) are such that a complete freeze-on of the seal can be prevented at minus temperatures, thus ensuring an opening of the sealing arrangement without damage.

5. Sealing arrangement as set forth in claim (1) **characterised in that** the sealing rail contains an elastomer (4) vulcanised in place, thus producing a constant contact pressure.

6. Sealing arrangement as set forth in claims (1) and (5) **characterised in that** the elastomer (4) has a good resilience.

7. Sealing arrangement as set forth in claim (1) with a profile (5) **characterised in that** the structure (3) can be attached without screws by pushing into the profile (5).

## Revendications

1. Dispositif d'étanchéité destiné à être monté entre un abattant de déchargement et la surface de chargement de véhicules de transport de matières en vrac **caractérisé en ce que** le dispositif comprend un rail d'étanchéité (1) métallique garni de quatre nervures de caoutchouc (2) juxtaposés, respectivement biseautées latéralement, vulcanisées de façon flexible, le rail d'étanchéité métallique étant associé élastiquement à un corps de base (3) en forme de U, et la dispositif pouvant former ainsi un bord étanché à ressort par rapport à la surface de chargement.

2. Dispositif d'étanchéité selon la revendication 1 **caractérisé en ce que**, lorsque le dispositif est monté, les nervures de caoutchouc (2) vulcanisées posent en surface sur la surface à rendre étanché et génèrent ainsi une meilleure étanchéité lors des angles de pression flexible de l'abattant de chargement.

3. Dispositif d'étanchéité selon la revendication 1 **caractérisé en ce que**, lorsque le dispositif est monté, les nervures de caoutchouc (2) vulcanisées s'adaptent flexiblement à la surface à rendre étanche et compensent ainsi les inégalités de la tôle de remorque.

4. Dispositif d'étanchéité selon la revendication 1 **caractérisé en ce que** la construction et la disposition des nervures de caoutchouc (2) vulcanisées biseautées est conçue de façon à empêcher un gel sur toute la surface du joint en cas de températures inférieures à zéro et à assurer une ouverture sans endommager le joint.

5. Dispositif d'étanchéité selon la revendication 1 **caractérisé en ce que** le rail d'étanchéité est vulcanisé dans un élastomère (4) et génère ainsi une pression régulière.

6. Dispositif d'étanchéité selon les revendications 1 et 5 **caractérisé en ce que** l'élastomère (4) a un bon effet élastique.

7. Dispositif d'étanchéité selon la revendication 1 avec un profil (5) **caractérisé en ce que** le corps de base (3) peut être fixé sans vis par introduction par pousée dans le profil (5).
